# EUROPEAN PATENT SPECIFICATION

(11) **EP 2 321 946 B1**
(45) Date of publication and mention of the grant of the patent: **23.05.2018**
(21) Application number: 09781333.1
(22) Date of filing: 31.07.2009
(51) Int. Cl.: H04L 29/06, H04L 29/12, H04W 8/04

(54) **METHOD, APPARATUS, SYSTEM AND COMPUTER PROGRAM PRODUCT FOR SUPPORTING LEGACY P-CSCF TO INDICATE TO THE S-CSCF TO SKIP AUTHENTICATION**
VERFAHREN, VORRICHTUNG, SYSTEM UND COMPUTERPROGRAMMPRODUKT ZUM UNTERSTÜTZEN VON LEGACY-P-CSCF, UM DER S-CSCF ANZUZEIGEN, AUTHENTIFIKATION ZU ÜBERSPRINGEN
PROCÉDÉS, DISPOSITIFS, SYSTÈME ET PRODUIT-PROGRAMME INFORMATIQUE ASSOCIÉ POUR LA PROTECTION D IDENTITÉ

(30) Priority: 01.08.2008 WO PCT/EP2008/060148
(43) Date of publication of application: 18.05.2011
(73) Proprietor: Nokia Solutions and Networks Oy, 02610 Espoo (FI)
(72) Inventor: SHEN, Jiadong, 81379 München (DE)
(74) Representative: Ruuskanen, Juha-Pekka
(86) International application number: PCT/EP2009/059925
(87) International publication number: WO 2010/012821

(56) References cited:
- EP-A1- 1 715 625
- US-A1- 2008 039 085
- NOKIA SIEMENS NETWORKS ET AL: "Discussion on Authentication for ICS" 3GPP DRAFT; C1-083064, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Budapest, Hungary; 20080811, 11 August 2008 (2008-08-11), XP050308304 [retrieved on 2008-08-11]
- 3GPP: "3rd Generation Partnership Project;Technical Specification Group Services and System Aspects;Coexistence between TISPAN and 3GPP authentication schemes (Release 7)" 3GPP DRAFT; DRAFT 783 ON TR 33803 V010, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Budapest, Hungary; 20061103, 3 November 2006 (2006-11-03), XP050208243 [retrieved on 2006-11-03]
- "Digital cellular telecommunications system (Phase 2+); Universal Mobile Telecommunications System (UMTS); Internet Protocol (IP) multimedia call control protocol based on Session Initiation Protocol (SIP) and Session Description Protocol (SDP); Stage 3 (3GPP TS 24.229 version 8.4.1 Release 8); ETSI" ETSI STANDARD, EUROPEAN TELECOMMUNICATIONS STANDARDS INSTITUTE (ETSI), SOPHIA ANTIPOLIS CEDEX, FRANCE, vol. 3-CN1, no. V8.4.1, 1 July 2008 (2008-07-01), XP014042079
- 3GPP: "3rd Generation Partnership Project;Technical Specification Group Services and System Aspects; 3G security;Access security for IP-based services(Release 8)" 3GPP DRAFT; 33203-830, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Vancouver, 10 June 2008 (2008-06-10), XP050280757 [retrieved on 2008-06-10]
- "3rd Generation Partnership Project; Technical Specification Group Services and System Aspects; IP Multimedia Subsystem (IMS) Centralized Services; Stage 2 (Release 8)", 3GPP STANDARD; 3GPP TS 23.292, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.5.1, 1 May 2008 (2008-05-01), pages 1-93, XP050361576,

## Description

### FIELD OF THE INVENTION

The present invention relates to identity protection. More specifically, the present invention relates to methods, apparatuses, a system and a related computer program product for identity protection. Examples of the present invention may be applicable to internet protocol (IP) multimedia subsystem (IMS) centralized services (ICS).

### BACKGROUND

ICS has been considered and introduced in the 3^{rd} generation partnership program (3GPP) e.g. release 8, technical specification (TS) 23.292.

ICS may provide communication services such that all services, and service control, are based e.g. on IMS mechanisms and enablers. ICS enables IMS services to users that are attached e.g. via the centralized service. When an ICS user accesses the IMS by using circuit switched (CS) access, i.e. via a ICS mobile switching center (IMSC) server (a MSC server supporting ICS), authentication and authorization may be performed in the IMSC server and therefore, e.g. a serving call session control function (S-CSCF) may skip IMS authentication for such an IMS registration.

The ICS user may be assigned a so-called special ICS IMS private user identity (IMPI) when accessing the IMS e.g. via the CS domain. The S-CSCF may use this special ICS IMPI as an indication for this situation that the user has been already authenticated and authorized by the IMSC server. However, the ICS IMPI is not protected against abuse. A malicious user may use such a special ICS IMPI to use the IMS service e.g. free of charge, as the authentication process is skipped.

In earlier IMS releases this was solved by the P-CSCF which checks a received registration request from a user and passes it on towards the S-CSCF indicating if the register request might come from a potential malicious user or not. The S-CSCF may then challenge the register request if the P-CSCF has indicated that the register request might come from a malicious user.

US 2008/0039085 describes a method for authenticating user equipment, the method comprises receiving a registration request from the user equipment at a proxying entity of a trusted network, receiving user-specific location information of the user equipment at the proxying entity of the trusted network, generating a network-trusted header in the proxying entity, the network-trusted header including the received user-specific location information, forwarding the network-trusted header to a serving entity for authentication, comparing the user-specific location information to a list of approved references in the serving entity and if the user - specific location information matches an entry in the list of approved references, authenticating the user equipment for access to the trusted network.

3GPP: "3rd Generation Partnership Project; Technical Specification Group Services and System Aspects; 3G security; Access security for IP-based services (Release 8)", 3GPP Draft, XP050280757 relates to specifying security features and mechanism for secure access to the IM subsystem (IMS) for the 3G mobile telecommunication system.

3GPP: "3rd Generation Partnership Project; Technical Specification Group Services and System Aspects; IP Multimedia Subsystem (IMS) Centralized Services; Stage 2 (Release 8)", 3GPP TS 23.292, XP050361576 relates to specifying the architectural requirements for delivery of consistent IMS services to a user regardless of the attached access type (e.g. CS domain access, or IP-CAN).

However the situation is different in the ICS system, since IMSC is now performing the registration and an additional authentication by the S-CSCF shall be avoided when the user has already been successful authenticated and authorized by the IMSC.

In the standardization bodies (e.g. 3GPP), it was discussed to use the P-Access-Network-Info (PANI) header to indicate from IMSC to S-CSCF that authentication may be skipped. The PANI header may contain information about the access network and a "network-provided" parameter. The information about the access network may inform the S-CSCF that authentication has already been performed.

A possible drawback of the PANI header solution resides in that older Releases P-CSCFs may not support the "network-provided" mechanism. Thus, a possibility may exist that this mechanism may be abused by a malicious user. The malicious user may set the "network-provided" parameter and an unaware P-CSCF may not remove the parameter. As a consequence, the S-CSCF may skip authentication.

One way to solve this problem may be appropriate administration, i.e. the S-CSCF may decide whether or not to accept the "network-provided" indication based on a database. However, such a database requires additional administration which may, in roaming scenarios, become unmanageable.

Another approach resides in using a solution based on databases only, where all MSC servers supporting ICS (IMSCs) are stored. Furthermore, the S-CSCF may only skip the authentication process if the ICS user registers e.g. with IMS via such an IMSC server. However, this alternative may cause an unacceptable administrative effort and will also cause large problem for the synchronization of the databases.

A further possible drawback may reside in that, as an ICS user may also access its home IMS domain via a visited IMSC server in case of roaming, all IMSC servers in foreign CS roaming domains have also to be stored in the database. This means whenever an IMSC server is added or removed, the databases in all domains with a roaming agreement have to be updated. This will cause unacceptable administrative efforts and will also cause a large problem for the synchronization of the databases.

In consideration of the above, it is an object of examples of the present invention to overcome one or more of the above drawbacks. In particular, the present invention provides methods, apparatuses, a system and a related computer program product for identity protection.

According to an example of the present invention, in a first aspect, this object is for example achieved by **a method** comprising:
transmitting, after successful registration of a terminal at a network entity, a registration message comprising terminal identity information and integrity indication information indicating affirmative integrity of the terminal identity information.

According to further refinements of the example of the present invention as defined under the above first aspect,
- the method further comprises generating the registration message by the network entity;
- the registration message is one of an initial registration message, a re-registration message and a de-registration message;
- the network entity is an internet protocol multimedia subsystem centralized service enhanced mobile switching center.

According to an example of the present invention, in a second aspect, this object is for example achieved by **a method** comprising:
processing, after reception of a registration message comprising terminal identity information and integrity indication information indicating integrity of the terminal identity information, the received registration message based on the terminal identity information and the integrity indication information such that,
i) if the integrity is indicated affirmative, an authentication procedure of the terminal is skipped, or,
ii) if the integrity is indicated negative, the received registration message is rejected without provisioning of key information related to registration of the terminal.

According to further refinements of the example of the present invention as defined under the above second aspect,
- the method further comprises receiving the registration message;
- the key information relates to a secure registration between the terminal and a network control entity;
- the processing of item i) is performed if a successful registration of the terminal is recognized, and the processing of item ii) is performed if the received registration message is recognized as unprotected;
- the integrity indication information indicating negative integrity is constituted by an integrity-protected flag being set to no.

According to further refinements of the example of the present invention as defined under the above first and second aspects,
- the integrity indication information indicating affirmative integrity is constituted by an integrity-protected flag being set to yes;
- the registration message is a session initiation protocol register message;
- the terminal identity information is constituted by a special internet protocol multimedia subsystem centralized service internet protocol multimedia private identity.

According to an example of the present invention, in a third aspect, this object is for example achieved by **an apparatus** comprising:
means for transmitting, after successful registration of a terminal at the apparatus, a registration message comprising terminal identity information and integrity indication information indicating affirmative integrity of the terminal identity information.

According to further refinements of the example of the present invention as defined under the above third aspect,
- the apparatus further comprises means for generating the registration message;
- the registration message is one of an initial registration message, a re-registration message and a de-registration message;
- the apparatus is constituted by an internet protocol multimedia subsystem centralized service enhanced mobile switching center.

According to an example of the present invention, in a fourth aspect, this object is for example achieved by **an apparatus** comprising:
means for processing, after reception of a registration message comprising terminal identity information and integrity indication information indicating integrity of the terminal identity information, the received registration message based on the terminal identity information and the integrity indication information such that,
i) if the integrity is indicated affirmative, an authentication procedure of the terminal is skipped, or,
ii) if the integrity is indicated negative, the received registration message is rejected without provisioning of key information related to registration of the terminal.

According to further refinements of the example of the present invention as defined under the above fourth aspect,
- the key information relates to a secure registration between the terminal and a network control entity;
- the apparatus further comprises means for receiving the registration message;
- the means for receiving is configured to receive the registration message from one of the network control entity and the apparatus according to the third aspect;
- the means for processing is configured to process according to item i) if a successful registration of the terminal is recognized, and is configured to process according to item ii) if the received registration message is recognized as unprotected;
- the integrity indication information indicating negative integrity is constituted by an integrity-protected flag being set to no;
- the apparatus is constituted by a serving call session control function.

According to further refinements of the example of the present invention as defined under the above third and fourth aspects,
- the integrity indication information indicating affirmative integrity is constituted by an integrity-protected flag being set to yes;
- the registration message is a session initiation protocol register message;
- the terminal identity information is constituted by a special internet protocol multimedia subsystem centralized service internet protocol multimedia private identity;
- the network control entity is constituted by a proxy call session control function;
- at least one, or more of means for transmitting, means for generating, means for processing, means for receiving and the apparatus is implemented as a chipset or module.

According to an example of the present invention, in a fifth aspect, this object is for example achieved by **an apparatus** comprising:
a transmitter configured to transmit, after successful registration of a terminal at the apparatus, a registration message comprising terminal identity information and integrity indication information indicating affirmative integrity of the terminal identity information.

According to further refinements of the example of the present invention as defined under the above fifth aspect,
- the apparatus further comprises a generator configured to generate the registration message;
- the registration message is one of an initial registration message, a re-registration message and a de-registration message;
- the apparatus is constituted by an internet protocol multimedia subsystem centralized service enhanced mobile switching center.

According to an example of the present invention, in a sixth aspect, this object is for example achieved by **an apparatus** comprising:
a processor configured to process, after reception of a registration message comprising terminal identity information and integrity indication information indicating integrity of the terminal identity information, the received registration message based on the terminal identity information and the integrity indication information such that,
i) if the integrity is indicated affirmative, an authentication procedure of the terminal is skipped, or,
ii) if the integrity is indicated negative, the received registration message is rejected without provisioning of key information related to registration of the terminal.

According to further refinements of the example of the present invention as defined under the above sixth aspect,
- the key information relates to a secure registration between the terminal and a network control entity;
- the apparatus further comprises a receiver configured to receive the registration message;
- the receiver is configured to receive the registration message from one of the network control entity and the apparatus according to the fifth aspect;
- the processor is configured to process according to item
   i) if a successful registration of the terminal is recognized, and is configured to process according to item
   ii) if the received registration message is recognized as unprotected;
- the integrity indication information indicating negative integrity is constituted by an integrity-protected flag being set to no;
- the apparatus is constituted by a serving call session control function.

According to further refinements of the example of the present invention as defined under the above fifth and sixth aspects,
- the integrity indication information indicating affirmative integrity is constituted by an integrity-protected flag being set to yes;
- the registration message is a session initiation protocol register message;
- the terminal identity information is constituted by a special internet protocol multimedia subsystem centralized service internet protocol multimedia private identity;
- the network control entity is constituted by a proxy call session control function;
- at least one, or more of a transmitter, a generator, a processor, a receiver and the apparatus is implemented as a chipset or module.

According to an example of the present invention, in a seventh aspect, this object is for example achieved by **a system** comprising:
a terminal;
an apparatus according to any one of the above third and fifth aspects; and
an apparatus according to any one the above fourth and sixth aspects.

According to an example of the present invention, in an eighth aspect, this object is for example achieved by **a computer program product** comprising code means for performing method steps of a method according to any one of the above first and second aspects, when run on a processing means or module.

According to an example of the present invention, in a ninth aspect, this object is for example achieved by **a computer program** comprising code means for performing a method comprising:
transmitting, after successful registration of a terminal at a network entity, a registration message comprising terminal identity information and integrity indication information indicating affirmative integrity of the terminal identity information.

According to an example of the present invention, in a tenth aspect, this object is for example achieved by **a computer program** comprising code means for performing a method comprising:
processing, after reception of a registration message comprising terminal identity information and integrity indication information indicating integrity of the terminal identity information, the received registration message based on the terminal identity information and the integrity indication information such that,
i) if the integrity is indicated affirmative, an authentication procedure of the terminal is skipped, or,
ii) if the integrity is indicated negative, the received registration message is rejected without provisioning of key information related to registration of the terminal.

In this connection, it has to be pointed out that examples of the present invention enable one or more of the following:
- Enabling the S-CSCF to verify whether the sender of a registration request is an IMSC or not, by ensuring that, by means of the concept only IMSC can send such an integrity protected request, and that via a P-CSCF only unprotected REGISTER request for ICS users can reach a S-CSCF;
- based on the item above, the S-CSCF can skip authorization and authentication if the register request is received from an IMSC.
- Providing a solution for the problem discussed in the standardization bodies (e.g. 3GPP);
- Alleviating administrative efforts and avoiding problems related to synchronization of the databases;
- Enabling the IMSC server to generate a register request, which in addition includes e.g. the special ICS IMPI.

### BRIEF DESCRIPTION OF THE DRAWINGS

Examples of the present invention are described herein below with reference to the accompanying drawings, in which:
Fig. 1 shows methods for identity protection according to an example of the present invention in case of acceptance of the registration request;
Fig. 2 shows the methods for identity protection according to an example of the present invention in case of rejection of the registration request; and
Fig. 3 shows apparatuses (e.g. IMSC 2021 and S-CSCF 2023) for identity protection according to an example of the present invention.

### DETAILED DESCRIPTION OF THE PRESENT INVENTION

Examples of the present invention are described herein below by way of example with reference to the accompanying drawings.

It is to be noted that for this description, the terms "IMSC, SIP REGISTER, special ICS IMPI, integrity_protected flag, integrity_protected flag='yes' and integrity_protected flag='no''' are examples for "network entity, registration message, terminal identity information, integrity indication information, affirmative integrity and negative integrity", respectively, without restricting the latter-named terms to the special technical or implementation details imposed to the first-named terms.

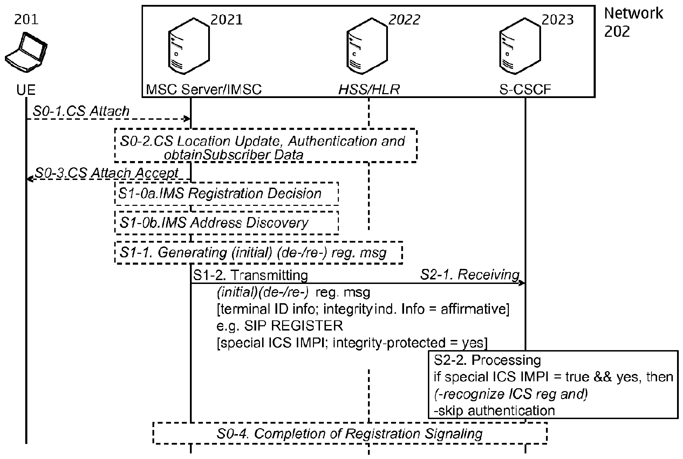

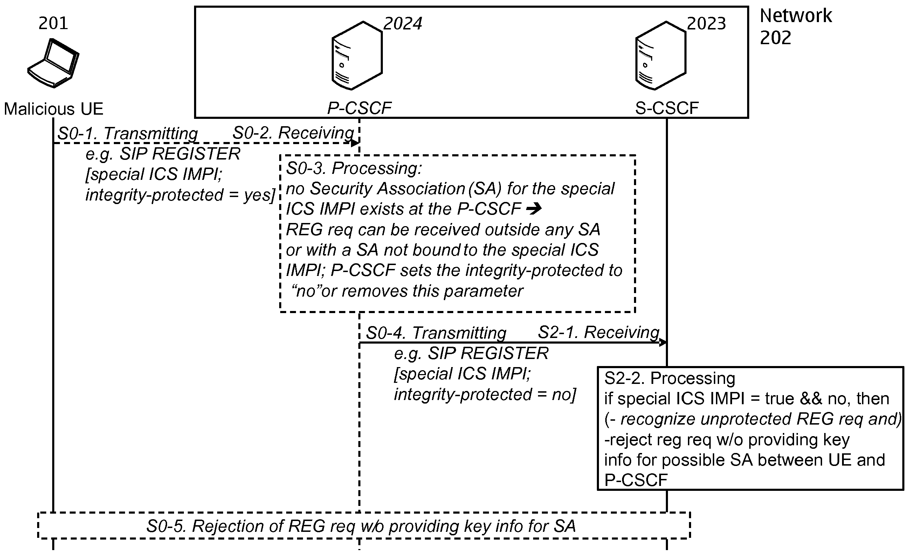

Fig. 1 shows methods for identity protection according to an example of the present invention in case of acceptance of the registration request, while Fig. 2 shows methods in case of rejection of the registration request. Signaling between elements is indicated in horizontal direction, while time aspects between signaling may be reflected in the vertical arrangement of the signaling sequence as well as in the sequence numbers. It is to be noted that the time aspects indicated in Figs. 1 and 2 do not necessarily restrict any one of the method steps shown to the step sequence outlined. This applies in particular to method steps that are functionally disjunctive with each other. Within Figs. 1 and 2, for ease of description, means or portions which may provide main functionalities are depicted with solid functional blocks or arrows and/or a normal font, while means or portions which may provide optional functions are depicted with dashed functional blocks or arrows and/or an italic font.

As shown in Fig. 1, a communication system 200 may comprise a terminal or user equipment (UE) 201 and a network 202. The network 202 may in turn comprise an MSC server or IMSC 2021 (referred to as "IMSC" hereinafter), an optional home subscriber server/home location register (HSS/HLR) 2022 and an S-CSCF 2023.

As optional preparatory measures, in optional steps SO-1 to SO-3, e.g. the UE 201 may perform registering (or attaching) to the IMSC 2021. Furthermore, in optional step S1-0a, e.g. the IMSC 2021 may perform deciding on the IMS registration received from the UE 201, and in optional step S1-0b, e.g. the IMSC 2021 may perform discovering an IMS address relating to the UE 201.

In optional step S1-1, e.g. the IMSC 2021 may perform generating a registration message comprising terminal identity information (e.g. special ICS IMPI) and integrity indication information (e.g. integrity_protected flag) indicating affirmative integrity of the terminal identity information (e.g. flag="yes").

In step S1-2, e.g. the IMSC 2021 may perform transmitting, after successful registration (see optional steps SO-1 to SO-3) of a terminal (e.g. UE 201) at a network entity (e.g. the IMSC 2021 itself), the registration message (e.g. SIP REGISTER).

As for further refinements of the above method related to the IMSC 2021, the registration message may be an initial registration message, a re- registration message or a de-registration message. Furthermore, the network entity may be the internet protocol multimedia subsystem centralized service enhanced mobile switching center.

Furthermore, in an optional step S2-1, e.g. the S-CSCF 2023 may perform receiving the registration message transmitted in step S1-2.

Then, in step S2-2, e.g. the S-CSCF 2023 may perform processing, after reception of the registration message (e.g. SIP REGISTER) comprising the terminal identity information (e.g. special ICS IMPI) and integrity indication information (e.g. integrity_protected flag) indicating integrity of the terminal identity information, the received registration message based on the terminal identity information and the integrity indication information such that,
i) if the integrity is indicated affirmative, an authentication procedure of the terminal (e.g. UE 201) is skipped, or,
ii) if the integrity is indicated negative (e.g. flag="no"), the received registration message is rejected without provisioning of key information related to registration of the terminal (not shown in Fig. 1).

Finally, in optional step SO-4, e.g. the network 202 may perform completing the registration signaling.

As for further refinements of the above method related to the S-CSCF 2023, the key information may relate to a secure registration between the terminal and a network control entity (e.g. a P-CSCF 2024 shown in Fig. 2). Furthermore, the processing of item i) may be performed if a successful registration of the terminal is recognized, and the processing of item ii) may be performed if the received registration message is recognized as unprotected. Moreover, the integrity indication information indicating negative integrity may be constituted by an integrity-protected flag being set to no (not shown in Fig. 1).

As for further refinements of the above methods related to both the IMSC 2021 and the S-CSCF 2023, the integrity indication information indicating affirmative integrity may be constituted by an integrity-protected flag being set to yes. Furthermore, the registration message may be a session initiation protocol (SIP) register message. Moreover, the terminal identity information may be constituted by a special internet protocol (IP) multimedia subsystem (IMS) centralized service (ICS) internet protocol multimedia private identity (IMPI).

As mentioned above, Fig. 2 shows those methods in case of rejection of the registration request. As shown in Fig. 2, in optional step SO-1, a malicious UE 201 may attempt to transmit e.g. a fraud SIP REGISTER request comprising its special ICS IMPI and the integrity-protected flag set to "yes".

In optional step SO-2, e.g. the P-CSCF 2024 may perform receiving the fraud SIP REGISTER request. In an optional step SO-3, e.g. the P-CSCF 2024 may perform processing such that if no security association (SA) for the received special ICS IMPI exists at the P-CSCF 2024, then the REGISTER request may be determined to be received outside any SA or with a SA not bound to the special ICS IMPI. In that case, the P-CSCF 2024 may set the integrity-protected to "no" or may remove this parameter.

Further, in an optional step SO-4, e.g. the P-CSCF 2024 may perform transmitting the SIP REGISTER request having the special ICS IMPI of the malicious UE 201 and the integrity-protected flag set to "no". This SIP REGISTER request may be received by the S-CSCF 2021 in the above-described optional step S2-1.

Then, in step S2-2, e.g. the S-CSCF 2023 may perform processing according to item ii) as described above.

Finally, in an optional step SO-5, e.g. the network 202 may perform rejecting the REGISTER request towards the malicious UE 201.

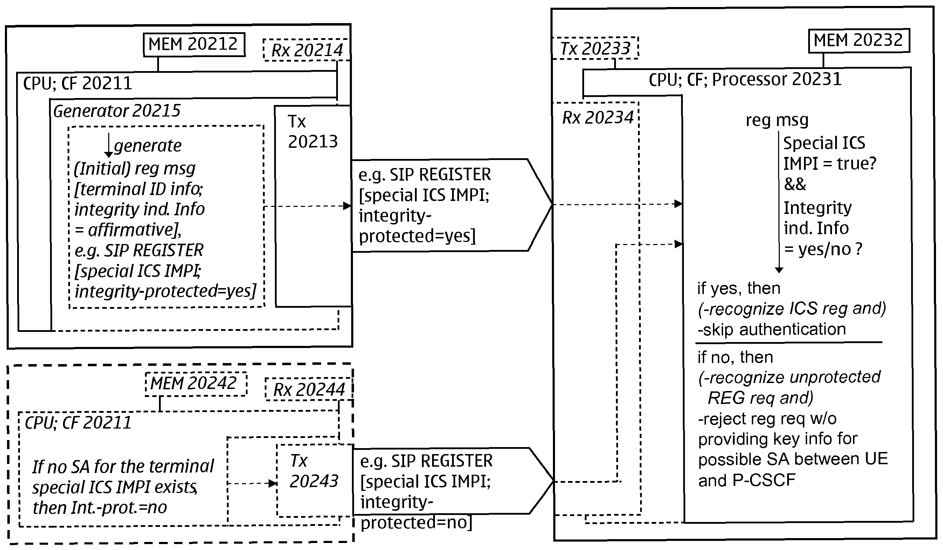

Fig. 3 shows apparatuses (e.g. IMSC 2021 and S-CSCF 2023) for identity protection according to an example of the present invention. Within Fig. 3, for ease of description, means or portions which may provide main functionalities are depicted with solid functional blocks or arrows and a normal font, while means or portions which may provide optional functions are depicted with dashed functional blocks or arrows and an italic font.

The IMSC 2021 may comprise a CPU (or core functionality CF) 20211, a memory 20212, a transmitter (or means for transmitting) 20213, an optional receiver (or means for receiving) 20214 and an optional generator (or means for generating) 20215.

In turn, the S-CSCF 2023 may comprise a CPU (or core functionality CF) 20231 which may also serve as a processor (or means for processing), a memory 20232, an optional transmitter (or means for transmitting) 20233 and an optional receiver (or means for receiving) 20234.

Finally, the optional P-CSCF 2024 may have a structure substantially similar to that of the S-CSCF 2023.

As indicated by the dashed extension of the functional block of the CPU 20211, the means for generating 20215 of the IMSC 2021 may be a functionality running on the CPU 20211 of the IMSC 2021 or may alternatively be a separate functional entity or means.

The CPUs 20x1 (wherein x = 21 and 23) may respectively be configured to process various data inputs and to control the functions of the memories 20x2, the means for transmitting 202x3 and the means for receiving 20x4 (and the means for generating 20215 of the IMSC 20221). The memories 20x2 may serve e.g. for storing code means for carrying out e.g. the methods according to an example of the present invention, when run e.g. on the CPUs 20x1. It is to be noted that the means for transmitting 20x3 and the means for receiving 20x4 may alternatively be provided as respective integral transceivers. It is further to be noted that the transmitters/receivers may be implemented i) as physical transmitters/receivers for transceiving e.g. via an air interface (e.g. in case of transmitting between the UE 201 and the IMSC 2021), ii) as routing entities e.g. for transmitting/receiving data packets e.g. in a PS (packet switched) network (e.g. between the IMSC 2021 or P-CSCF 2024 and the S-CSCF 2023 when disposed as separate network entities), iii) as functionalities for writing/reading information into/from a given memory area (e.g. in case of shared/common CPUs or memories e.g. of the IMSC 2021 or P-CSCF 2024 and the S-CSCF 2023 when disposed as an integral network entity (not shown)), or iv) as any suitable combination of i) to iii).

As optional preparatory measures, e.g. the UE 201 (not shown) may perform registering (or attaching) to the IMSC 2021. Furthermore, e.g. the IMSC 2021 may perform deciding on the IMS registration received from the UE 201, and e.g. the IMSC 2021 may perform discovering an IMS address relating to the UE 201 (e.g. special ICS IMPI).

Optionally, e.g. the means for generating 20215 of the IMSC 2021 may perform generating a registration message comprising terminal identity information (e.g. the special ICS IMPI) and integrity indication information (e.g. integrity_protected flag) indicating affirmative integrity of the terminal identity information (e.g. flag="yes").

Then, e.g. the means for transmitting 20213 of the IMSC 2021 may perform transmitting, after successful registration of a terminal (e.g. UE 201) at a network entity (e.g. the IMSC 2021 itself), the registration message (e.g. SIP REGISTER).

Alternatively, e.g. the P-CSCF 2024 may perform receiving the fraud SIP REGISTER request, and may perform processing such that if no security association (SA) for the received special ICS IMPI exists at the P-CSCF 2024, then the REGISTER request may be determined to be received outside any SA or with a SA not bound to the special ICS IMPI. In that case, the P-CSCF 2024 may set the integrity-protected to "no" or may remove this parameter, and may perform transmitting the SIP REGISTER request having the special ICS IMPI of the malicious UE 201 and the integrity-protected flag set to "no".

As for further refinements related to the IMSC 2021, the registration message may be an initial registration message, a re-registration message or a de-registration message. Furthermore, the network entity may be the internet protocol multimedia subsystem centralized service enhanced mobile switching center.

Optionally, e.g. the means for receiving 20234 of the S-CSCF 2023 may perform receiving the registration request message (comprising e.g. integrity-protected = "yes") transmitted by the means for transmitting 20213 of the IMSC 2021 or the registration request message (comprising e.g. integrity-protected = "no") transmitted by the P-CSCF 2024.

Then, e.g. the means for processing 20231 of the S-CSCF 2023 may perform processing, after reception of the registration message (e.g. SIP REGISTER) comprising the terminal identity information (e.g. special ICS IMPI) and integrity indication information (e.g. integrity_protected flag) indicating integrity of the terminal identity information, the received registration message based on the terminal identity information and the integrity indication information such that,
i) if the integrity is indicated affirmative, an authentication procedure of the terminal (e.g. UE 201) is skipped, or,
ii) if the integrity is indicated negative (e.g. flag="no"), the received registration message is rejected without provisioning of key information related to registration of the terminal.

As for further refinements related to the S-CSCF 2023, the key information may relate to a secure registration between the terminal and a network control entity (e.g. a P-CSCF 2024 shown in Fig. 2). Furthermore, the means for processing may be configured to process according to item i) if a successful registration of the terminal is recognized, and according to item ii) if the received registration message is recognized as unprotected. Moreover, the integrity indication information indicating negative integrity may be constituted by an integrity-protected flag being set to no.

As for further refinements related to both the IMSC 20221 and the S-CSCF 2023, the integrity indication information indicating affirmative integrity may be constituted by an integrity-protected flag being set to yes. Furthermore, the registration message may be a session initiation protocol (SIP) register message. Moreover, the terminal identity information may be constituted by a special internet protocol (IP) multimedia subsystem (IMS) centralized service (ICS) internet protocol multimedia private identity (IMPI).

Furthermore, at least one of, or more of means for transmitting 20213, means for generating 20215, means for processing 20231, means for receiving 20234 and/or the IMSC 2021 and/or the S-CSCF 2023, or the respective functionalities carried out, may be implemented as a chipset or module.

Finally, the present invention also relates to a system which may comprise a terminal or user equipment, the above-described IMSC 2021 and the above-described S-CSCF 2023.

Without being restricted to the details following in this section, the embodiment of the present invention may be summarized as follows:
As the ICS user has been already successfully authenticated in the CS domain, its IMS communication via the CS domain/IMSC server is protected. Therefore, a parameter that indicates successful "integrity-protection" may be used to indicate from the MSC server to the S-CSCF that authentication in IMS may be skipped. It is proposed to use a parameter in the Authorization header. A suitable parameter may the so called "integrity-protected" parameter.

When an ICS user accesses the IMS e.g. via an IMSC server, the IMSC server shall use the special ICS IMPI to register the ICS user with IMS (as specified e.g. in 3GPP TS 23.292). And in the REGISTER request, the "integrity-protected" parameter in the Authorization header may be set to "yes". Justification resides in that the user is already authenticated in IMSC. When the S-CSCF receives the REGISTER request and recognizes the special IMPI and the "integrity-protected" parameter is set to "yes", it may skip the authentication procedure for the REGISTER request. And the S-CSCF may always reject a REGISTER request with the special ICS IMPI, where the "integrity-protected" parameter is not set to "yes". The S-CSCF shall never provide keys in the rejection to allow UE and P-CSCF to establish a SA for the special ICS IMPI.

Because the "integrity-protected" parameter was introduced, all P-CSCFs may ensure that when "integrity-protected" parameter for a REGISTER request is set to "yes", this REGISTER request is received via a Security-Association (SA) for the ICS IMPI contained in the REGISTER request. Thus, it is ensured that misuse of the integrity-protected parameter by a malicious user may not happen. As the S-CSCF may never provide the keys to UE and P-CSCF to establish a SA for a special ICS IMPI, the S-CSCF may only receive a REGISTER for a special ICS IMPI from an IMSC, where the "integrity-protected" parameter is set to "yes". So, the S-CSCF may safely skip the authentication for such a REGISTER request.

In other words, when an attacker abuses the ICS IMPI to register with IMS, no SA can be established between a P-CSCF and the UE, as no keys are provided by the S-CSCF for that ICS IMPI. Therefore, no P-CSCF may set the "integrity-protected" parameter to "yes" for such a REGISTER request. And the S-CSCF may reject such a REGISTER request.

In still other words, it is proposed in the S-CSCF to allow the rejection of the request by the S-CSCF without the provisioning of any keys if ICS IMPI is recognized and the integrity flag is set to "no", and for skipping further authentication when the flag is set to "yes" and the special ICS IMPI is recognized.

Still further, e.g. a Release 5 S-CSCF may challenge the unprotected REGISTER request, where keys may be provided to protect the next REGISTER request. And, the UE may then insert a response to the challenge in a protected REGISTER request. The S-CSCF may only finally reject the protected REGISTER request, if the response from the UE is wrong. There are also other exceptional handlings for protected REGISTER request. But for an unprotected REGISTER request, the Release 5 S-CSCF may try to challenge the request, which is part of the authentication procedure.

Furthermore, the rejection is dependent on the definition of rejection: e.g. a Release 5 S-CSCF may reject an unprotected REGISTER request with a challenge (e.g. response code 401 Unauthorized). A UE may then respond to the challenge e.g. in the next REGISTER request. An S-CSCF supporting ICS users may reject an unprotected REGISTER request without any challenge or keys (e.g. response code 403 Forbidden). Both may be seen as rejection if a rejection is a negative response. An S-CSCF supporting ICS may use a special rejection. And, this special rejection may not provide any keys to protect communication between UE and P-CSCF.

### [Further examples]

For the purpose of the present invention as described herein above, it should be noted that
- an access technology may be any technology by means of which a user equipment can access an access network (or base station, respectively). Any present or future technology, such as WiMAX (Worldwide Interoperability for Microwave Access) or WLAN (Wireless Local Access Network), BlueTooth, Infrared, and the like may be used; although the above technologies are mostly wireless access technologies, e.g. in different radio spectra, access technology in the sense of the present invention may also imply wirebound technologies, e.g. IP based access technologies like cable networks or fixed line.
- a network may be any device, unit or means by which a station entity or other user equipment may connect to and/or utilize services offered by the access network; such services include, among others, data and/or (audio-) visual communication, data download etc.;
- generally, the present invention may be applicable in those network/user equipment environments relying on a data packet based transmission scheme according to which data are transmitted in data packets and which are, for example, based on the Internet Protocol IP. The present invention is, however, not limited thereto, and any other present or future IP or mobile IP (MIP) version, or, more generally, a protocol following similar principles as (M)IPv4/6, is also applicable;
- a user equipment may be any device, unit or means by which a system user may experience services from an access network;
- method steps likely to be implemented as software code portions and being run using a processor at a network element or terminal (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the invention in terms of the functionality implemented;
- method steps and/or devices, units or means likely to be implemented as hardware components at the IMSC and/or S-CSCF, or any module(s) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may alternatively be based on any security architecture capable e.g. of authentication, authorization, keying and/or traffic protection;
- devices, units or means (e.g. IMSC and/or S-CSCF, or any one of their respective means) can be implemented as individual devices, units or means, but this does not exclude that they are implemented in a distributed fashion throughout the system, as long as the functionality of the device, unit or means is preserved;
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

Although the present invention has been described herein before with reference to particular embodiments thereof, the present invention is not limited thereto and various modification can be made thereto.

For ease of clarity, the following table provides a survey of the abbreviations used in the above description. It is to be noted that an "s" following an abbreviation represents the plural of that abbreviation, e.g. "UEs" represents "user equipments".
- 3GPP: 3^{rd} generation partnership project
- TR/TS: Technical report/technical specification
- UE: User equipment
- CS: Circuit switched
- PS: Packet switched
- IP: Internet protocol
- IMS: IP multimedia subsystem
- ICS: IMS Centralized Service
- IMPI: IMS Private User Identity

| | |
|---|---|
| MSC | Mobile switching center |

- IMSC: ICS enhanced MSC
- SA: Security Association

| | |
|---|---|
| CSCF | Call session control function |
| PANI | P-Access-Network-Info |
| P-CSCF | Proxy CSCF |
| S-CSCF | Serving CSCF |

## Claims

1. A method, comprising:
transmitting, after successful registration of a terminal at a first network entity (2021), a registration message by the first network entity (2021) to a second network entity (2023), wherein the first network entity (2021) is an internet protocol multimedia subsystem centralized services mobile switching center,
**characterised in that** the registration message comprises terminal identity information and integrity indication information and whereby the integrity indication information indicates the successful registration of the terminal by the first network entity (2021).

2. The method according to claim 1, further comprising generating the registration message by the first network entity.

3. The method according to claim 1 or 2, wherein the registration message is one of an initial registration message, a re-registration message and a de-registration message.

4. A method, comprising:
processing, by a first network entity (2023), after reception of a registration message from a second network entity (2021), **characterised by** the registration message comprising terminal identity information and integrity indication information, the received registration message based on the terminal identity information and the integrity indication information such that, if the integrity indication indicates a successful registration of the terminal by the second network entity (2021), an authentication procedure of the terminal is skipped, wherein the second network entity (2021) is an internet protocol multimedia subsystem centralized services mobile switching center.

5. The method according to claim 4, further comprising receiving the registration message.

6. The method according to any one of claims 1 to 5, wherein the registration message is a session initiation protocol register message.

7. An apparatus (2021), comprising:
means for transmitting, after successful registration of a terminal at the apparatus, a registration message to a first network entity (2023), wherein the apparatus (2021) is an internet protocol multimedia subsystem centralized services mobile switching center,
**characterised in that** the registration message comprises terminal identity information and integrity indication information and whereby the integrity indication information indicates the successful registration of the terminal by the apparatus (2021).

8. The apparatus according to claim 7, further comprising means for generating the registration message.

9. The apparatus according to claim 7 or 8, wherein the registration message is one of an initial registration message, a re-registration message and a de-registration message.

10. An apparatus (2023), comprising:
means for processing, after reception of a registration message from a first network entity (2021), **characterised by** the registration message comprising terminal identity information and integrity indication information, the received registration message based on the terminal identity information and the integrity indication information such that, if the integrity indication indicates a successful registration of the terminal by the first network entity (2021), an authentication procedure of the terminal (201) is skipped, wherein the first network entity (2021) is an internet protocol multimedia subsystem centralized services mobile switching center.

11. The apparatus (2023) according to claim 10, further comprising means for receiving the registration message.

12. The apparatus (2023) according to any one of claims 7 to 11, wherein the registration message is a session initiation protocol register message.

13. The apparatus according to any one of claim 10, claim 11 and claim 12 depending on claim 10 or 11, wherein the apparatus is constituted by a serving call session control function.

14. A system, comprising:
a terminal (201);
an apparatus (2021) according to any one of claim 7, claim 9, or claim 12 depending on claim 7 to 9; and
an apparatus (2023) according to any one of claim 10, claim 11, claim 12 depending on claim 10 or 11, or claim 13.

15. A computer program product comprising code means for performing method steps of a method according to any one of claims 1 to 6, when run on a processing means or module.

## Patentansprüche

1. Verfahren, umfassend:
Übertragen, nach erfolgreicher Registrierung eines Endgeräts bei einer ersten Netzwerkeinheit (2021), einer Registrierungsnachricht von der ersten Netzwerkeinheit (2021) an eine zweite Netzwerkeinheit (2023), wobei die erste Netzwerkeinheit (2021) eine Funkvermittlungsstelle für zentralisierte Internetprotokoll-Multimedia-Untersystem-Dienste ist,
**dadurch gekennzeichnet, dass** die Registrierungsnachricht eine Endgerätekennungsinformation und eine Integritätsanzeigeinformation umfasst, und wobei die Integritätsanzeigeinformation die erfolgreiche Registrierung des Terminals durch die erste Netzwerkeinheit (2021) anzeigt.

2. Verfahren nach Anspruch 1, ferner umfassend das Erzeugen der Registrierungsnachricht durch die erste Netzwerkeinheit.

3. Verfahren nach Anspruch 1 oder 2, wobei die Registrierungsnachricht eine Erstregistrierungsnachricht, eine Neuregistrierungsnachricht oder eine Deregistrierungsnachricht ist.

4. Verfahren, umfassend:
Verarbeiten, durch eine erste Netzwerkeinheit (2023), nach dem Empfang einer Registrierungsnachricht von einer zweiten Netzwerkeinheit (2021), **dadurch gekennzeichnet, dass** die Registrierungsnachricht eine Endgerätekennungsinformation und eine Integritätsanzeigeinformation umfasst, der empfangenen Registrierungsnachricht basierend auf der Endgerätekennungsinformation und der Integritätsanzeigeinformation, sodass, wenn die Integritätsanzeigeinformation eine erfolgreiche Registrierung des Endgeräts durch die zweite Netzwerkeinheit (2021) anzeigt, eine Authentifikationsprozedur des Endgeräts übersprungen wird, wobei die zweite Netzwerkeinheit (2021) eine Funkvermittlungsstelle für zentralisierte Internetprotokoll-Multimedia-Untersystem-Dienste ist.

5. Verfahren nach Anspruch 4, ferner umfassend das Empfangen der Registrierungsnachricht.

6. Verfahren nach einem der Ansprüche 1 bis 5, wobei die Registrierungsnachricht eine Sitzungseinleitungsprotokoll-Registernachricht ist.

7. Vorrichtung (2021), umfassend:
Mittel zum Übertragen, nach erfolgreicher Registrierung eines Endgeräts bei der Vorrichtung, einer Registrierungsnachricht an eine erste Netzwerkeinheit (2023), wobei die Vorrichtung (2021) eine Funkvermittlungsstelle für zentralisierte Internetprotokoll-Multimedia-Untersystem-Dienste ist;
**dadurch gekennzeichnet, dass** die Registrierungsnachricht eine Endgerätekennungsinformation und eine Integritätsanzeigeinformation umfasst, und wobei die Integritätsanzeigeinformation die erfolgreiche Registrierung des Terminals durch die Vorrichtung (2021) anzeigt.

8. Vorrichtung nach Anspruch 7, ferner umfassend Mittel zum Erzeugen der Registrierungsnachricht.

9. Vorrichtung nach Anspruch 7 oder 8, wobei die Registrierungsnachricht eine Erstregistrierungsnachricht, eine Neuregistrierungsnachricht oder eine Deregistrierungsnachricht ist.

10. Vorrichtung (2023), umfassend:
Mittel zum Verarbeiten, nach dem Empfang einer Registrierungsnachricht von einer ersten Netzwerkeinheit (2021), **dadurch gekennzeichnet, dass** die Registrierungsnachricht eine Endgerätekennungsinformation und eine Integritätsanzeigeinformation umfasst, der empfangenen Registrierungsnachricht basierend auf der Endgerätekennungsinformation und der Integritätsanzeigeinformation, sodass, wenn die Integritätsanzeige eine erfolgreiche Registrierung des Endgeräts durch die erste Netzwerkeinheit (2021) anzeigt, eine Authentifikationsprozedur des Endgeräts (201) übersprungen wird, wobei die erste Netzwerkeinheit (2021) eine Funkvermittlungsstelle für zentralisierte Internetprotokoll-Multimedia-Untersystem-Dienste ist.

11. Vorrichtung (2023) nach Anspruch 10, ferner umfassend Mittel zum Empfangen der Registrierungsnachricht.

12. Vorrichtung (2023) nach einem der Ansprüche 7 bis 11, wobei die Registrierungsnachricht eine Sitzungseinleitungsprotokoll-Registernachricht ist.

13. Vorrichtung nach einem der Ansprüche 10, 11 und 12 in Abhängigkeit von Anspruch 10 oder 11, wobei die Vorrichtung aus einer bedienenden Anrufsitzungssteuerungsfunktion besteht.

14. System, umfassend:
ein Endgerät (201);
eine Vorrichtung (2021) nach einem der Ansprüche 7, 9 oder 12 in Abhängigkeit von Anspruch 7 bis 9; und eine Vorrichtung (2023) nach einem der Ansprüche 10, 11, 12 in Abhängigkeit von Anspruch 10 oder 11 oder Anspruch 13.

15. Computerprogrammprodukt, umfassend Kodiermittel zum Durchführen von Verfahrensschritten eines Verfahrens nach einem der Ansprüche 1 bis 6, wenn es auf einem Verarbeitungsmittel oder einem Modul ausgeführt wird.

## Revendications

1. Procédé comprenant :
la transmission, après un enregistrement réussi d'un terminal auprès d'une première entité de réseau (2021), d'un message d'enregistrement par la première entité de réseau (2021) à une seconde entité de réseau (2023), laquelle première entité de réseau (2021) est un centre de commutation mobile de services centralisés de sous-système multimédia de protocole Internet ;
**caractérisé en ce que** le message d'enregistrement comprend des informations d'identité de terminal et des informations d'indication d'intégrité, et **en ce que** les informations d'indication d'intégrité indiquent l'enregistrement réussi du terminal par la première entité de réseau (2021).

2. Procédé selon la revendication 1, comprenant en outre la génération du message d'enregistrement par la première entité de réseau.

3. Procédé selon la revendication 1 ou 2, dans lequel le message d'enregistrement est l'un d'un message d'enregistrement initial, d'un message de réenregistrement et d'un message de désenregistrement.

4. Procédé comprenant :
le traitement, par une première entité de réseau (2023), après réception d'un message d'enregistrement depuis une seconde entité de réseau (2021), **caractérisé en ce que** le message d'enregistrement comprend des informations d'identité de terminal et des informations d'indication d'intégrité, du message d'enregistrement reçu en fonction des informations d'identité de terminal et des informations d'indication d'intégrité de sorte que, si les informations d'indication d'intégrité indiquent un enregistrement réussi du terminal par la seconde entité de réseau (2021), une procédure d'authentification du terminal est sautée, dans lequel la seconde entité de réseau (2021) est un centre de commutation mobile de services centralisés de sous-système multimédia de protocole Internet.

5. Procédé selon la revendication 4, comprenant en outre la réception du message d'enregistrement.

6. Procédé selon l'une quelconque des revendications 1 à 5, dans lequel le message d'enregistrement est un message de registre de protocole d'initiation de session.

7. Appareil (2021) comprenant :
un moyen pour transmettre, après un enregistrement réussi d'un terminal auprès de l'appareil, un message d'enregistrement à une première entité de réseau (2023), lequel appareil (2021) est un centre de commutation mobile de services centralisés de sous-système multimédia de protocole Internet ;
**caractérisé en ce que** le message d'enregistrement comprend des informations d'identité de terminal et des informations d'indication d'intégrité, et les informations d'indication d'intégrité indiquant ainsi l'enregistrement réussi du terminal par l'appareil (2021).

8. Appareil selon la revendication 7, comprenant en outre un moyen pour générer le message d'enregistrement.

9. Appareil selon la revendication 7 ou 8, dans lequel le message d'enregistrement est l'un d'un message d'enregistrement initial, d'un message de réenregistrement et d'un message de désenregistrement.

10. Appareil (2023) comprenant :
un moyen pour traiter, après réception d'un message d'enregistrement depuis une première entité de réseau (2021), **caractérisé en ce que** le message d'enregistrement comprend des informations d'identité de terminal et des informations d'indication d'intégrité, le message d'enregistrement reçu en fonction des informations d'identité de terminal et des informations d'indication d'intégrité de sorte que, si les informations d'indication d'intégrité indiquent un enregistrement réussi du terminal par la première entité de réseau (2021), une procédure d'authentification du terminal (201) est sautée, dans lequel la première entité de réseau (2021) est un centre de commutation mobile de services centralisés de sous-système multimédia de protocole Internet.

11. Appareil (2023) selon la revendication 10, comprenant en outre un moyen pour recevoir le message d'enregistrement.

12. Appareil (2023) selon l'une quelconque des revendications 7 à 11, dans lequel le message d'enregistrement est un message de registre de protocole d'initiation de session.

13. Appareil selon l'une quelconque de la revendication 10, de la revendication 11 et de la revendication 12 lorsque dépendante de la revendication 10 ou 11, dans lequel l'appareil est constitué par une fonction de commande de session d'appel de desserte.

14. Système comprenant :
un terminal (201) ;
un appareil (2021) selon l'une quelconque de la revendication 7, de la revendication 9 et de la revendication 12 lorsque dépendante des revendications 7 à 9 ; et
un appareil (2023) selon l'une quelconque de la revendication 10, de la revendication 11, de la revendication 12 lorsque dépendante de la revendication 10 ou 11, ou de la revendication 13.

15. Produit de type programme informatique comprenant un moyen de type code pour effectuer des étapes de procédé d'un procédé selon l'une quelconque des revendications 1 à 6 lorsqu'il tourne sur un moyen ou un module de traitement.
